Europäisches Patentamt

(19) European Patent Office

Office européen des brevets

(11) Publication number: **0 143 099**
**B1**

(12) **EUROPEAN PATENT SPECIFICATION**

(45) Date of publication of patent specification: **01.02.89**

(21) Application number: **84870134.8**

(22) Date of filing: **17.09.84**

(51) Int. Cl.⁴: **A 01 N 25/04, A 01 N 43/70 //**
**(A01N43/70, 37:26)**

(54) Storage stable emulsion flowable formulation containing a mixture of alachlor/atrazine as the active agent.

(30) Priority: **19.09.83 US 533685**

(43) Date of publication of application:
**29.05.85 Bulletin 85/22**

(45) Publication of the grant of the patent:
**01.02.89 Bulletin 89/05**

(84) Designated Contracting States:
**AT BE CH DE FR GB IT LI LU NL**

(56) References cited:
**EP-A-0 010 972**
**EP-A-0 063 867**
**EP-A-0 070 702**
**EP-A-0 088 049**

(73) Proprietor: **MONSANTO COMPANY**
**Patent Department 800 North Lindbergh Boulevard**
**St. Louis, Missouri 63166 (US)**

(72) Inventor: **Prill, Erhard John**
**1215 Lockett Lane**
**Kirkwood Missouri 63122 (US)**

(74) Representative: **Lunt, John Cooper et al**
**Monsanto Europe S.A. Patent Department**
**Avenue de Tervuren 270-272 Letter Box No 1**
**B-1150 Brussels (BE)**

Courier Press, Leamington Spa, England.

## Description

This invention relates to an emulsion flowable formulation of 2-chloro-2',6'-diethyl-N-(methoxymethyl)acetanilide (commonly known as alachlor) and 2-chloro-4-ethylamino-6-isopropylamino-1,3,5-triazine (commonly known as atrazine). An emulsion flowable formulation consists of three phases: an organic phase (discontinuous phase) dispersed in an aqueous phase, (the continuous phase) i.e., an oil-in-water emulsion, and a solid phase dispersed throughout the continuous phase. In the formulation of this invention, alachlor dissolved in organic solvent forms the organic or discontinuous phase which is dispersed throughout the aqueous or continuous phase. The solid phase, atriazine, is also dispersed throughout the continuous phase.

Various formulations of alachlor are known in the art. For example, alachlor is sold by Monsanto Company as a emulsifiable concentrate formulation, and as a granular formulation. The active ingredient in the formulated state is sold under the name LASSO® herbicide. Various formulations of atrazine are known in the art, e.g., as a water-base flowable, and also as a water dispersible granule. It is known in the art to tank-mix alachlor and atrazine and it is further known to combine alachlor and atrazine as a one-package mixture. Monsanto Company sells a one package mixture of alachlor/atrazine under the tradename LASSO® and ATRAZINE. This formulation is an emulsion flowable and is described in Example 10 herein.

EP—A—0 088 049 discloses flowable herbicidal compositions containing an active component combination of at least one chlorotriazine and at least one chloroacetanilide, and a surfactant component which consists of an anionic surfactant which is a mono- or diphosphoric acid ester of a phenol polyglycol ether, and at least one non-ionic surfactant which is an alkoxy-, alkanoyloxy- or phenol-polyglycol ether.

The prior art emulsion flowable formulation of alachlor/atrazine suffers from the disadvantage that the active agent atrazine settles out in the bottom of the storage container over time. Further, it is difficult to get the settled atrazine back into suspension, even if the container is shaken. It may be difficult, or even impossible, to properly agitate the formulation if the alachlor/atrazine emulsion flowable is stored in, for example, 3785m³ (1000 gallon) bulk holding tanks rather than small containers. Unexpectedly, the emulsion flowable formulation of this invention exhibits very little settling during storage over periods of time. The atrazine "assay" remains constant over time and under varying storage conditions. The prior art formulation, on the other hand, has a markedly reduced atrazine assay.

The present invention offers the advantage that one is able to formulate an active agent which is readily soluble in organic solvents, i.e., alachlor, along with a solid active agent which is mostly insoluble in water or organic solvents, to produce a one-package mixture wherein the amount of organic solvent used in the formulation is greatly reduced when compared to the known emulsifiable concentrate formulations of alachlor herbicide.

The present invention is directed to an emulsion flowable formulation comprising the following ingredients:

| Components | Percent by Weight |
|---|---|
| Active Herbicidal Agent Alachlor | 20.00 — 37.50 |
| Atrazine | 10.00—20.00 |
| Solvent | 15.00—30.00 |
| Emulsifier | 2.00— 7.25 |
| Stabilizer | 0.05— 0.75 |
| Hydrophilic Clay | 0.20— 2.50 |
| Antifreeze Agent | 1.00—10.00 |
| Formulation Adjuvants | 0.00— 5.00 |
| Water | Balance |
|  | 100.00 |

The term "active Herbicidal Agent" as used herein refers to a mixture of alachlor (2-chloro-2',6'-di-ethyl-N-(methoxymethyl); acetanilide and atrazine (2-chloro-4-ethylamino-6-isopropylamino-1,3,5-triazine). The preparation and herbicidal use of alachlor is described in U.S. Patent No. 3,442,945 and 3,547,620. The preparation and herbicidal use of atrazine is described in U.S. Patent No. 2,891,855.

Alachlor is present in the formulation at from 20.0% to 37.5% by weight of the composition, preferably

2

from 25.0% to about 30.0% by weight of the composition. Atrazine is present in the formulation at from 10.0% to 20.0% by weight of the composition, preferably at from 15% to 17.5% by weight and most preferably from 16.0% to 17.0% by weight of the composition.

The solvent used in the formulation is a hydrocarbon or an halogenated aromatic hydrocarbon, it can be a single organic solvent or may be a blend of two or more such materials. The solvent useful herein is one in which the herbicidal material, i.e., alachlor, readily dissolves and which is substantially immiscible with water. Examples of suitable solvents include aromatic hydrocarbons such as xylene, trimethyl benzene, C9 aromatics, i.e. mixtures of alkyl benzenes containing an average of 9 carbon atoms, polynuclear aromatic hydrocarbons such as naphthalene and alkyl naphthalenes, halogenated aromatic hydrocarbons such as monochlorobenzene and *ortho*-chlorotoluene. The preferred hydrocarbon solvent for use herein is monochlorobenzene (MCB) or a mixture of MCB and C9 aromatics.

The solvent is present in the formulation at from 15.0% to 30.0% by weight of the composition, preferably at from 17.5% to 25.0% by weight and most preferably from 17.5% to 20.0% by weight of the composition.

The emulsifying agent used herein may consist of a single emulsifying agent or may be a mixture of emulsifying agents and may be a nonionic or anionic surfactant or a blend of two or more such surfactants. In general, the emulsifiers found to be useful in the formulation of this invention are those used in formulating emulsifiable concentrate formulations of various acetanilide herbicides as, for example, Lasso® EC herbicide and Dual® 8E herbicide. The active agent in Dual is 2-chloro-N-(2-ethyl-6-methylphenyl)-N-(2-methoxy-1-methylethyl acetamide. Any emulsifier or emulsifier combination which gives good emulsion properties when the formulation is diluted with water is suitable for use herein. Many of these emulsifier materials are described in *McCutcheon's Detergents and Emulsifiers* North American Edition, 1980 Annual, published by the McCutcheon Division, MC Publishing Company, 175 Rock Road, Glen Rock, New Jersey, 07452, U.S.A. Such surface-active agents are also described in *McCutcheon's Detergents and Emulsifiers*, International Edition, 1982, published by the aforementioned company.

Suitable emulsifiers which may be specifically named are as follows: "Flo Mo" 50 G and 60H, a calcium alkyl aryl sulfonate anionic emulsifier; "Flo Mo" XHA, an ethylene oxide/propylene oxide block co-polymer on butanol, nonionic emulsifier; "Flo Mo" 14D, a dodecyl phenol ethoxylate, nonionic emulsifier; and "Flo Mo" 54C, a polyethoxylated castor oil, nonionic emulsifier, have been found to be useful in the present invention. Also, as shown in Table I, various blends of these materials are useful in the formulations of the present invention. All of the "Flo Mo" emulsifiers are manufactured by Sellers Chemical, a Division of DeSoto Chemical Corporation, Inc., 1320 Sams Avenue, P.O. Box 23523, Harahan, Louisiana, 79183.

## TABLE I

| "Flo Mo LHF-N" | | "Flo Mo LEH" | | "Flo Mo LHF" | |
|---|---|---|---|---|---|
| Component | By Weight | Component | By Weight | Component | By Weight |
| Flo Mo XHA | 24.80 | Flo Mo 50H | 40.60 | Flo Mo 50H | 51.00 |
| Flo Mo 14D | 58.90 | Flo Mo XHA | 14.73 | Flo Mo 14D | 12.15 |
| Flo Mo 54C | 9.30 | Flo Mo 54C | 34.99 | Flo Mo 54C | 4.65 |
| *T-400/AN2K | 7.00 | T-400/AN2K | 4.16 | T-400/AN2K | 3.43 |
| | 100.00 | | 100.00 | | 100.00 |

*T-400 is a blend of C9 aromatics manufactured by Tenneco Chemicals, Inc.

Penasol AN2K is a blend of kerosene and heavy aromatic napthas manufactured by Ammoco.

EP 0 143 099 B1

Other emulsifiers which may be mentioned are "Stepan 884—68A" which is a proprietary blend of anionic and nonionic emulsifiers manufactured by Stepan Chemical Company, Edens and Winnetka Roads, Northfield, Illinois, 60093; Sponto® AK 3048T which is an anionic/nonionic blend of oil-soluble sulfonates with polyoxyethlene ethers manufactured by Witco Chemical Corporation, Organics Division, 277 Park Avenue, New York, New York, 10017; "Atlox" 3439F, 4880B, 4890B and 4900B which are blends of anionic/nonionic emulsifiers typically calcium alkylarylsulfonate/nonionic blends; the HLB of these blends will range from about 11.3 to 12.8; these emulsifiers are manufactured by Atlas Chemical Industries N.V., Everslaan 45, B—3078 Everberg, Belgium, or in the U.S.A. by ICI Americas Inc., New Murphy Road and Concord Pike, Wilmington, Delaware, 19897.

The emulsifier or mixtures of emulsifiers will be present in the formulation of the present invention at from 2.0% to 7.25% by weight of the composition; preferably from 3.0 to 5.0% by weight and most preferably from 3.5% to 4.5% by weight of the composition.

The term "Stabilizer" as used herein refers to a material which is used at relatively low concentrations to maintin the emulsion stability of the formulations of the invention. The materials which have been found to be useful herein are magnesium oxide (MgO), [Mg(OH)$_2$] magnesium hydroxide, dolomite, (MgCO$_3$.CaCO$_3$) calcium hydroxide, ammonium bicarbonate, sodium bicarbonate, and sodium metasilicate. Preferred for use herein is magnesium oxide. The stabilizer will be present in the formulations of the invention at from 0.05% to 0.75% by weight, preferably at from 0.075% to 0.25% by weight and most preferably at 0.1% to 0.2% by weight.

The hydrophilic clays which have been found to be useful in the present invention are 2:1 aluminum:silicon expanding lattice aluminosilicates with some isomorphous substitution of magnesium and iron for aluminum; examples of such clays are "HPM—20" microfine bentonite manufactured by American Colloid Company, 5100 Suffield Court, Skokie, Illinois, 60077, Bentone EW® and Macaloid®, manufactured by N. L. Chemicals, 1430 Branding Lane, Suite 108, Downers Grove, Illinois, 60615, "Veegum T", manufactured by R. P. Vanderbilt Company, 30 Winfield Street, Norwalk, Connecticut, 06855, and "Min-V-Gel 200" manufactured by Floridin Company, 3 Penn Center, Pittsburgh, Pennsylvania 15235.

"HPM—20" microfine bentonite is a montmorillonite clay which has such characteristics as thixotropy, swelling, and the ability to mix with other ingredients and which is a sodium aluminum hydroxy silicate. "Bentone EW" is a chemically modified magnesium aluminum silicate, which is a thickening and suspending agent for water-based systems. The material has a specific gravity of 2.5 and a density of 2503,82kg/m$^3$ "Macaloid" is also a magnesium aluminum silicate with a specific gravity of 2.65. "Veegum T" is a colloidal magnesium silicate which disperses and swells in water. The material is used as an emulsion stabilizer, suspending agent and thickener in cosmetics and pharmaceutical formulas. "Min-V-Gel" is a colloidal attapulgite clay, the main constituent of which is hydrous magnesium aluminum silicate.

The clays are present in the formulation at from 0.20% to 2.5% by weight of the composition, preferably at from 1.0% to 2.0% by weight and most preferably at from 1.0% to 1.5% by weight of the total composition.

Lower alkyl glycols, e.g., ethylene or propylene glycol, are used in the formulations of the invention as anti-freeze agents. Amounts of these components ranging from 1.0% to 10.0% by weight of the composition, preferably from 1.0% to 5.0% by weight and most preferably at from 1.0% to 3.0% by weight of the total composition will adequately provide the composition with the desired anti-freeze protection.

Minor quantities, i.e., from 0% to 5.0% by weight of the composition of one or more inert formulation adjuvants such as anti-foaming agents, biocides, dyes, anti-corrosion agents, may be incorporated into the emulsion flowable formulation of the present invention, especially if said formulations are to be stored for any extended period of time prior to use, particularly under adverse storage conditions.

Silicone anti-foaming agents are "formulation adjuvants" which are frequently used in the compositions of this invention. Silicone anti-foaming agents are exemplified by the following commercially available anti-foam agents: "Antifoam Fl", manufactured by Hodag Chemical Corporation, 7274 Central Park Avenue, Skokie, Illinois 60076; "Mazu DF 100S", available from Mazer Chemicals, Incorporated, 3938 Porett Drive, Gurnee, Illinois 60031; "Rhodorsil 426R", manufactured by Rhone-Poulenc, 33 Rue Jean Goujon, 75360 Paris, France; and "Sag 47", sold by Union Carbide Corporation, 270 Park Avenue, New York, New York, 10017.

From 0.01% to 0.20% by weight of the defoaming agent has been found to be useful in the present invention, preferably from 0.02% to 0.04% by weight of total composition is used herein.

The novel emulsion flowable formulations of this invention are prepared according to the following procedure. The alachlor, solvent, and emulsifier are mixed together; thereafter, the water, hydrated clay, anti-freeze agent, stabilizer, and appropriate formulation adjuvants, are added with agitation to form an oil-in-water emulsion. The atrazine is then added to the emulsion. The atrazine particle size will generally be in the range of 90% less than 15—20 microns and 99% less than 25—30 microns. An alternative method is to add the atrazine to the initial alachlor/solvent/emulsifier mixture, followed by the addition of the remaining formulation components. In either case, the final mix is homogenized using medium to high shear equipment.

Any shearing means known to those in the art to be capable of producing sufficient shear to produce dispersion, emulsification, and/or homogenization is suitable for use herein. Illustrative of such shearing means is the "Polytron" homogenizer, sold by Brinkmann Instruments, Inc., Cantiague Road, Westbury, New York, 11590, USA, which utilizes mechanical shearing with sonic energy to effective homogenization, dispersion, or emulsification, the Tekmar, "Dispax Reactor DR 3—916", available from the Tekmar Company, P.O. Box 272021, Cincinnati, Ohio 45222, USA, and the "Cowles Dissolver", manufactured by Moorehouse Industries, Inc., 1600 West Commonwealth Avenue, Fillerton, California 92633, USA.

It is preferred to hydrate the clays before they are used in preparing the formulations of the invention. The hydration or swelling of the clays may be accomplished by high shear in an aqueous suspension. Elevated temperatures are beneficial in reaching the desired viscosity. One method of hydrating the clays used herein is as follows: the initial hydration is accomplished by adding the clay slowly to hot water with good agitation; agitation is continued for 5—15 minutes or more; the viscous mix is then sheared using high shear equipment such as a Tekmar fitted with one fine and two superfine stages to give a viscosity of approximately 2 Pas (2000 cps).

In general, the clays were used as an aqueous mixture having a viscosity of about 2 Pas (2000 cps). "HPM—20" microfine bentonite was usually prepared as a 6.6% clay/water mixture, Bentone® EW as a 2% clay mix, and Veegum T as a 5% clay mix. Hydration of these clays is well within the skill of the art and directions for the hydration are available from the manufacture of the clay material.

The following examples are illustrative of the concentration emulsion flowable formulations contemplated by the present invention. Unless otherwise indicated, all examples were prepared according to the procedure described above.

## Example 1

| Component | Percent By Weight |
|---|---|
| Alachlor (94.3%) | 29.48 |
| Atrazine (97%) | 17.20 |
| MCB | 16.95 |
| C9 Aromatics | 11.28 |
| FloMo LHF | 3.69 |
| MgO | 0.10 |
| Anti-Foam* | 0.02 |
| Bentone EW | 0.39 |
| Ethylene Glycol | 1.50 |
| Methyl Violet | 0.005 |
| Water | 19.385 |
| TOTAL | 100.00 |

*Unless otherwise specified, "SAG 47" silicon antifoam agent was used in the Examples herein.

Example 2

| Component | Percent By Weight |
|---|---|
| Alachlor (94.3%) | 29.46 |
| Atrazine (97%) | 17.18 |
| MCB | 16.94 |
| C9 Aromatics | 11.26 |
| FloMo LHF | 3.69 |
| MgO | 0.10 |
| HPM—20 | 0.53 |
| Anti-Foam | 0.02 |
| Ethylene Glycol | 1.50 |
| Methyl Violet | 0.005 |
| Water | 19.315 |
| TOTAL | 100.00 |

Example 3

| Component | Percent By Weight |
|---|---|
| Alachlor (94.3%) | 29.41 |
| Atrazine (97%) | 17.15 |
| MCB | 16.91 |
| C9 Aromatics | 11.25 |
| FloMo LHF | 3.68 |
| MgO | 0.10 |
| Anti-Foam | 0.02 |
| Veegum T | 0.50 |
| Ethylene Glycol | 1.50 |
| Methyl Violet | 0.005 |
| Water | 19.475 |
| TOTAL | 100.00 |

## Example 4

| Component | Percent By Weight | | | |
|---|---|---|---|---|
| | 4a | 4b | 4c | 4d |
| Alachlor (94.3%) | 29.23 | 29.23 | 29.23 | 29.23 |
| Atrazine (97%) | 17.16 | 17.16 | 17.16 | 17.16 |
| MCB | 17.05 | 17.05 | 17.05 | 17.05 |
| C9 Aromatics | 11.36 | 11.36 | 11.36 | 11.36 |
| FloMo LHF | 3.68 | 3.68 | 3.68 | 3.68 |
| MgO | 0.60 | 0.30 | 0.15 | 0.075 |
| Veegum T (5%) | 8.00 | 8.00 | 8.00 | 8.00 |
| Ethylene Glycol | 1.50 | 1.50 | 1.50 | 1.50 |
| Water | 11.42 | 11.72 | 11.87 | 11.945 |
| TOTAL | 100.00 | 100.00 | 100.00 | 100.00 |

## Example 5

| Component | Percent By Weight |
|---|---|
| Alachlor (94.3%) | 29.23 |
| Atrazine (97%) | 17.16 |
| MCB | 17.05 |
| C9 Aromatics | 11.36 |
| FloMo LHF | 3.68 |
| MgO | 0.15 |
| HPM—20 (6.6%) | 10.00 |
| Ethylene Glycol | 1.50 |
| Water | 9.87 |
| TOTAL | 100.00 |

## Example 6

| Component | Percent By Weight | | | | | | | | |
|---|---|---|---|---|---|---|---|---|---|
| | 6a | 6b | 6c | 6d | 6e | 6f | 6g | 6h | 6i |
| Alachlor (94.3%) | 29.23 | 29.23 | 29.23 | 29.23 | 29.23 | 29.23 | 29.23 | 29.23 | 29.23 |
| Atrazine (97%) | 17.16 | 17.16 | 17.16 | 17.16 | 17.16 | 17.16 | 17.16 | 17.16 | 17.16 |
| MCB | 17.05 | 17.05 | 17.05 | 17.05 | 17.05 | 17.05 | 17.05 | 17.05 | 17.05 |
| C9 Aromatics | 11.36 | 11.36 | 11.36 | 11.36 | 11.36 | 11.36 | 11.36 | 11.36 | 11.36 |
| FloMo LHF | 3.68 | 3.68 | 3.68 | 3.68 | 3.68 | 3.68 | 3.68 | 3.68 | 3.68 |
| MgO | 0.10 | 0.10 | 0.10 | 0.10 | 0.10 | 0.10 | 0.10 | 0.10 | 0.10 |
| HPM - 20 (6.6%) | 5.00 | 11.00 | 17.00 | - | - | - | - | - | - |
| Bentone EW (3%) | - | - | - | 9.00 | 12.00 | 17.00 | - | - | - |
| Veegum T (5%) | - | - | - | - | - | - | 10.00 | 16.00 | 19.92 |
| Ethylene Glycol | 1.50 | 1.50 | 1.50 | 1.50 | 1.50 | 1.50 | 1.50 | 1.50 | 1.50 |
| Water | 14.92 | 8.92 | 2.92 | 10.92 | 7.92 | 2.92 | 9.92 | 3.94 | 0.00 |
| TOTAL | 100.00 | 100.00 | 100.00 | 100.00 | 100.00 | 100.00 | 100.00 | 100.00 | 100.00 |

EP 0 143 099 B1

## Example 7

| Component | Percent By Weight | | |
|---|---|---|---|
| | 7a | 7b | 7c |
| Alachlor (95%) | 29.23 | 29.23 | 29.23 |
| Atrazine (97%) | 17.16 | 17.16 | 17.16 |
| MCB | 17.05 | 17.05 | 17.05 |
| C9 Aromatics | 11.36 | 11.36 | 11.36 |
| FloMo LHF | 3.68 | 3.68 | 3.68 |
| MgO | 0.10 | 0.20 | 0.20 |
| Min-U-Gel (7%) | - | 9.00 | - |
| Bentone LT (2%) | - | - | 15.00 |
| Macaloid (5%) | 13.00 | - | - |
| Ethylene Glycol | 1.50 | 1.50 | 1.50 |
| Water | 6.92 | 10.82 | 4.82 |
| TOTAL | 100.00 | 100.00 | 100.00 |

Example 8

| Component | Percent By Weight | | | | | |
|---|---|---|---|---|---|---|
| | 8a | 8b | 8c | 8d | 8e | 8f |
| Alachlor (94.3%) | 29.46 | 29.46 | 29.46 | 29.46 | 29.46 | 29.46 |
| Atrazine (97%) | 17.15 | 17.15 | 17.15 | 17.15 | 17.15 | 17.15 |
| MCB | 16.94 | 16.94 | 16.94 | 16.94 | 16.94 | 16.94 |
| C9 Aromatics | 11.29 | 11.29 | 11.29 | 11.29 | 11.29 | 11.29 |
| FloMo LMN | 3.68 | 3.68 | 3.68 | – | – | – |
| Stepan 884-68A | – | – | – | 3.68 | 3.68 | 3.68 |
| Sponto AK 2048T | – | – | – | – | – | – |
| Atlox 3439F | – | – | – | – | – | – |
| MgO | 0.10 | 0.10 | 0.10 | 0.10 | 0.10 | 0.10 |
| Veegum T (5%) | 10.00 | – | – | 10.00 | – | – |
| HPM - 20 (6.6%) | – | 8.00 | – | – | 8.00 | – |
| Bentone EW (3%) | – | – | 13.00 | – | – | 13.00 |
| Ethylene Glycol | 1.50 | 1.50 | 1.50 | 1.50 | 1.50 | 1.50 |
| Water | 9.88 | 11.88 | 6.88 | 9.88 | 11.88 | 6.88 |
| TOTAL | 100.00 | 100.00 | 100.00 | 100.00 | 100.00 | 100.00 |

Example 8
(Continued)

| Component | Percent By Weight | | | | | |
|---|---|---|---|---|---|---|
| | 8g | 8h | 8i | 8j | 8k | 8l |
| Alachlor (94.3%) | 29.46 | 29.46 | 29.46 | 29.46 | 29.46 | 29.46 |
| Atrazine (97%) | 17.15 | 17.15 | 17.15 | 17.15 | 17.15 | 17.15 |
| MCB | 16.94 | 16.94 | 16.94 | 16.94 | 16.94 | 16.94 |
| C9 Aromatics | 11.29 | 11.29 | 11.29 | 11.29 | 11.29 | 11.29 |
| FloMo LMN | - | - | - | - | - | - |
| Stepan 884-68A | - | - | - | - | - | - |
| Sponto AK 2048T | 3.68 | 3.68 | 3.68 | - | - | - |
| Atlox 3439F | - | - | - | 3.68 | 3.68 | 3.68 |
| MgO | 0.10 | 0.10 | 0.10 | 0.10 | 0.10 | 0.10 |
| Veegum T (5%) | 10.00 | - | - | 10.00 | - | - |
| HPM - 20 (6.6%) | - | 8.00 | - | - | 8.00 | - |
| Bentone EW (3%) | - | - | 13.00 | - | - | 13.00 |
| Ethylene Glycol | 1.50 | 1.50 | 1.50 | 1.50 | 1.50 | 1.50 |
| Water | 9.88 | 11.98 | 6.88 | 9.88 | 11.88 | 6.88 |
| TOTAL | 100.00 | 100.00 | 100.00 | 100.00 | 100.00 | 100.00 |

EP 0 143 099 B1

Example 9

| Component | Percent By Weight |
|---|---|
| Alachlor (92.6%) | 34.38 |
| Atrazine (97%) | 14.06 |
| Xylene | 16.10 |
| Atlox 4890B | 5.60 |
| Atlox 4900B | 0.40 |
| MgO | 0.10 |
| Veegum T | 0.20 |
| Anti-Foam Agent* | 0.04 |
| Ethylene Glycol | 2.50 |
| Water | 26.62 |
| | 100.00 |

*Rhodorsil 426R

The emulsion flowable alachlor/atrazine compositions of this invention are useful as preemergence herbicides to selectively control weeds in crops, particularly corn. In general, the compositions will be applied at a rate from 4 to 6 pounds of active agent per acre. The exact rate used will depend upon the crop, the soil type, the climate, and the weeds to be controlled. Selection of the appropriate rate and specific application techniques is within the skill of the art.

As noted above, a major disadvantage of the prior art emulsion flowable formulation of the invention is the settling of the atrazine component in the bottom of the container over time. This "hard settle" is difficult to get back into suspension using the amount of agitation which the user is accustomed to applying. If the prior art emulsion flowable alachlor/atrazine formulation is packaged in small (e.g., 9,46L (25 gallon) containers, it is possible to agitate the formulation; however, if the formulation is stored in bulk holding tanks having a large capacity (e.g., 3,785m³ (1000 gallons), it may be impossible to sufficiently agitate the prior art formulation to get the atrazine solids back into solution. If this occurs, the amount of atrazine in the formulation (atrazine assay) is decreased and the formulation will not contain the desired amount of atrazine. The date shown below illustrates the superior storage stability of the emulsion flowable formulations of the invention.

Example 10

In this Example, a commercially available emulsion flowable formulation of alachlor/atrazine was compared to the formulation of Example 1 and each of the formulations were canned in 9,46L (2½ gallon) jugs and placed in a warehouse for nine months. The formulations were then compared. The results of the comparison are shown in Table II.

Formulation A

| Component | Percent By Weight |
|---|---|
| Alachlor (95.3%) | 28.96 |
| Atrazine (97.0%) | 17.11 |
| Monochlorobenzene | 16.70 |
| FLOMO LHF | 5.00 |
| Ethylene Glycol | 1.50 |
| Silicon Defoamer | 0.02 |
| Methyl Violet 2B | 0.005 |
| Water | 30.70 |
| | 100.00 |

13

# EP 0 143 099 B1

TABLE 3

Sediment In 9,46l (2½ Gallon) Jug 453 g (Pounds)

| Formulation | Before Mixing | After 5 Inversions |
|---|---|---|
| A | 4.33 | 3.20 |
| Example 1 | 0.25 | 0 |
| Example 3 | 0.13 | 0 |

**Claims**

1. An emulsion flowable herbicidal composition comprising the following components:
   A. from 20.0% to 37.5% by weight of 2-chloro-2',6'-diethyl-N-(methoxymethyl)acetanilide;
   B. from 10.0% to 20.0% by weight of 2-chloro-4-ethylamino-6-isopropylamino-1,3,5-triazine herbicide;
   C. from 15.0% to 30.0% by weight of a solvent which is a hydrocarbon or an halogenated aromatic hydrocarbon;
   D. from 2.0% to 7.25% by weight of an emulsifier;
   E. from 0.05% to 0.75% by weight of a stabilizer;
   F. from 0.20% to 2.5% by weight of a hydrophilic clay;
   G. from 1.0% to 10.0% by weight of an antifreeze agent; and
   H. balance being made up of water.

2. A composition according to Claim 1 comprising the following components:
   A. from 25.0% to 30.0% by weight of 2-chloro-2',6'-diethyl-N-(methoxymethyl)acetanilide;
   B. from 15.0% to 17.5% by weight of 2-chloro-4-ethylamino-6-isopropylamino-1,3,5-triazine herbicide;
   C. from 17.5% to 25.0% by weight of a solvent which is a solvent which is a hydrocarbon or an halogenated aromatic hydrocarbon;
   D. from 3.0% to 5.0% by weight of an emulsifier;
   E. from 0.075% to 0.25% by weight of a stabilizer;
   F. from 1.0% to 2.0% of a hydrophilic clay;
   G. from 1.0% to 5.0% by weight of an antifreeze agent; and
   H. balance being made up of water.

3. A composition according to either of Claims 1 and 2 wherein said solvent is monochlorobenzene or a mixture of alkyl benzenes containing an average of 9 carbon atoms.

4. A composition according to any of Claims 1 to 3 wherein said emulsifier is selected from calcium alkyl aryl sulfonate, dodecyl phenol ethoxylate, butanol ethylene oxide/propylene oxide block copolymer and polyethoxylated castor oil and mixtures thereof.

5. A composition according to Claim 4 wherein said emulsifier is selected from calcium alkyl aryl sulfonate, dodecyl phenol ethoxylate and polyethoxylated castor oil.

6. A composition according to Claim 4 wherein said emulsifier is selected from calcium alkyl aryl sulfonate butanol ethylene oxide/ propylene oxide block copolymer and polyethoxylated castor oil.

7. A composition according to Claim 4 wherein said emulsifier is selected from dodecyl phenol ethoxylate, butanol ethylene oxide/propylene oxide block copolymer and polyethoxylated castor oil.

8. A composition according to any of Claims 1 to 7 wherein said stabilizer is magnesium oxide.

9. A composition according to any of Claims 1 to 8 wherein said antifreeze agent is ethylene glycol or propylene glycol.

10. A composition according to any of Claims 1 to 9 additionally containing up to 5.0% by weight of formulation adjuvants.

11. A composition according to Claim 10 containing from 0.1% to 0.2% by weight of formulation adjuvants.

12. A composition according to either of Claims 10 and 11, wherein said formulation adjuvant is a silicone antifoam agent.

13. A composition according to Claim 12 wherein said silicone antifoam agent is present in a concentration of from 0.02% to 0.04% by weight of the composition.

14. A emulsion flowable composition comprising the following components:
   A. from 25.0% to 30.0% by weight of 2-chloro-2',6'-diethyl-N-(methoxymethyl)acetanilide herbicide;
   B. from 16.0% to 17.0% by weight of 2-chloro-4-ethylamino-6-isopropylamino-1,3,5-triazine herbicide;
   C. from 17.5% to 20.0% by weight of a monochlorobenzene;
   D. from 3.5% to 4.5% by weight of an emulsifier, which is selected from calcium alkyl aryl sulfonates, dodecyl phenol ethoxylates, ethylene oxide/propylene oxide block copolymer on butanol, and polyethoxylated castor oils;
   E. from 0.1% to 0.2% by weight of magnesium oxide;
   F. from 1.0% to 1.5% by weight of a hydrophilic clay;
   G. from 1.0% to 3.0% by weight of ethylene glycol;

14

# EP 0 143 099 B1

H. from 0.02% to 0.04% by weight of a silicone antifoam agent; and
I. balance being made up of water.

## Patentansprüche

1. Fließfähige herbizide Zusammensetzung in Form einer Emulsion umfassend folgende Bestandteile:
A. 20,0 bis 37,5 Gew.% 2-Chlor-2',6'-diäthyl-N-(methoxymethyl)acetanilid;
B. 10,0 bis 20,0 Gew.% 2-Chlor-4-äthylamino-6-isopropylamino-1,3,5-triazinherbizid;
C. 15,0 bis 30,0 Gew.% eines Lösungsmittels, das ein Kohlenwasserstoff oder ein halogenierter aromatischer Kohlenwasserstoff ist;
D. 2,0 bis 7,25 Gew.% eines Emulgiermittels;
E. 0,05 bis 0,75 Gew.% eines Stabilisators;
F. 0,20 bis 2,5 Gew.% eines hydrophilen Tons;
G. 1,0 bis 10,0 Gew.% eines Frostschutzmittels und
H. Rest bestehend aus Wasser.
2. Zusammensetzung nach Anspruch 1 umfassend die folgenden Bestandteile:
A. 25,0 bis 30,0 Gew.% 2-Chlor-2',6'-diäthyl-N-(methoxymethyl)acetanilid;
B. 15,0 bis 17,5 Gew.% 2-Chlor-4-äthylamino-6-isopropylamino-1,3,5-triazinherbizid;
C. 17,5 bis 25,0 Gew.% eines Lösungsmittels, das ein Kohlenwasserstoff oder ein halogenierter aromatischer-Kohlenwasserstoff ist;
D. 3,0 bis 5,0 Gew.% eines Emulgiermittels;
E. 0,075 bis 0,25 Gew.% eines Stabilisators;
F. 1,0 bis 2,0 Gew.% eines hydrophilen Tons;
G. 1,0 bis 5,0 Gew.% eines Frostschutzmittels und
H. Rest bestehend aus Wasser.
3. Zusammensetzung nach Anspruch 1 oder 2, worin das Lösungmsittel Monochlorbenzol oder eine Mischung von Alkylbenzolen mit durchschnittlich 9 Kohlenstoffatomen ist.
4. Zusammensetzung nach einem der Ansprüche 1 bis 3, worin das Emulgiermittel ausgewählt ist aus Calciumalkylarylsulfonat, Dodecylphenoläthoxylat, Butanoläthylenoxid/Propylenoxidblockcopolymer und polyäthoxyliertem Rizinusöl und Mischungen hievon.
5. Zusammsetzung nach Anspruch 4, worin das Emulgiermittel ausgewählt ist aus Calciumalkylarylsulfonat, Dodecylphenoläthoxylat und polyäthoxyliertem Rizinusöl.
6. Zusammsetzung nach Anspruch 4, worin das Emulgiermittel ausgewählt ist aus Calciumalkylarylsulfonat, Butanoläthylenoxid/Propylenoxidblockcopolymer und polyäthoxyliertem Rizinusöl.
7. Zusammsetzung nach Anspruch 4, worin das Emulgiermittel ausgewählt ist aus Dodecylphenoläthoxylat, Butanoläthylenoxid/Propylenoxidblockcopolymer und polyäthoxyliertem rizinusöl.
8. Zusammsetzung nach einem der Ansprüche 1 bis 7, worin der Stabilisator Magnesiumoxid ist.
9. Zusammsetzung nach einem Der Ansprüche 1 bis 8, worin das Frostschutzmittel Äthylenglykol oder Propylenglykol ist.
10. Zusammsetzung nach einem Der Ansprüche 1 bis 9, die außerdem bis zu 5,0 Gew.% Formulierungsadjuvantien enthält.
11. Zusammsetzung nach Anspruch 10, die 0,1 bis 0,2 Gew.% Formulierungsadjuvantien enthält.
12. Zusammsetzung nach Anspruch 10 oder 11, worin das Formulierungsadjuvans ein Silikonschaumverhütungsmittel ist.
13. Zusammsetzung nach Anspruch 12, worin das Silikonschaumverhütungsmittel in einer Konzentration von 0,02 bis 0,04 Gew.% der Zusammensetzung vorhanden ist.
14. Fließfähige zusammensetzung in Form einer Emulsion umfassend die folgenden bestandteil:
A. 25,0 bis 30,0 Gew.% 2-Chlor-2',6'-diäthyl-N-(methoxymethyl)acetanilidherbizid;
B. 16,0 bis 17,0 Gew.% 2-Chlor-4-äthylamino-6-isopropylamino-1,3,5-triazinherbizid;
C. 17,5 bis 20,0 Gew.% Monochlorbenzol;
D. 3,5 bis 4,5 Gew.% eines Emulgiermittels, das ausgewählt ist aus Calciumalkylarylksulfonaten, Dodecylphenoläthoxylaten, Äthylenoxid/Propylenoxidblockcopolymer auf Butanol und polyäthoxylierten Rizinusölen;
E. 0,1 bis 0,2 Gew.% Magnesiumoxid;
F. 1,0 bis 1,5 Gew.% eines hydrophilen Tons;
G, 1,0 bis 3,0 Gew.% Äthylenglykol;
H. 0,02 bis 0,04 Gew.% eines Silikonschaumverhütungsmittels und
I. Rest bestehend aus Wasser.

## Revendications

1. Composition herbicide en émulsion pouvant s'écouler comprenant les composants suivants:
A. de 20,0% à 37,5% en poids de 2-chloro-2',6'-diéthyl-N-(méthoxyméthyl)acétanilide;

15

B. de 10,0% à 20,0% en poids d'herbicide de 2-chloro-4-éthylamino-6-isopropylamino-1,3,5-triazine;

C. de 15,0% à 30,0% en poids d'un solvant qui est un hydrocarbure ou un hydrocarbure aromatique halogéné;

D. de 2,0% à 7,25% en poids d'un agent émulsionnant;

E. de 0,05% à 0,75% en poids d'un stabilisasant;

F. de 0,20% à 2,5% en poids d'une argile hydrophile;

G. de 1,0% à 10,0% en poids d'un agent antigel;

H. le reste étant constitué par de l'eau.

2. Composition selon la revendication 1, comprenant les composants suivants:

A. de 25,0% à 30,0% en poids de 2-chloro-2',6'-diéthyl-N-(méthoxyméthyl)acétanilide;

B. de 15,0% à 17,5% en poids d'herbicide de 2-chloro-4-éthylamino-6-isopropylamino-1,3,5-triazine;

C. de 17,5% à 25,0% en poids d'un solvant qui est un hydrocarbure ou un hydrocarbure aromatique halogéné;

D. de 3,0% à 5,0% en poids d'un agent émulsionnant;

E. de 0,075% à 0,25% en poids d'un stabilisasant;

F. de 0,1% à 2,0% d'une argile hydrophile;

G. de 1,0% à 5,0% en poids d'un agent antigel;

H. le reste étant constitué par de l'eau.

3. Composition selon l'une quelconque des revendications 1 et 2, dans laquelle le solvant est le monochlorobenzène ou un mélange d'alkylbenzènes contenant en moyenne 9 atomes de carbone.

4. Composition selon l'une quelconque des revendications 1 à 3, dans laquelle l'agent émulsionnant est choisi parmi un alkylarylsulfonate de calcium, en éthoxylate de dodécylphénol, un copolymère séquencé oxyde d'éthylène/oxyde de propylène butanol et une huile de ricin polyéthoxylée et leurs mélanges.

5. Composition selon la revendication 4, dans laquelle l'agent émulsionnant est choisi parmi un alkylarylsulfonate de calcium, un éthoxylate de dodécylphénol et une huile de ricin polyéthoxylée.

6. Composition selon la revendication 4, dans laquelle l'agent émulsionnant est choisi parmi un alkylarylsulfonate de calcium, en copolymère séquencé oxye d'éthylène/oxyde de propylène butanol et une huile de ricin polyéthoxylée.

7. Composition selon la revendication 4, dans laquelle l'agent émulsionnant est choisi parmi un éthoxylate de dodécylphénol, un copolymère séquencé oxyde d'éthylène/oxyde de propylène butanol et une huile de ricin polyéthoxylée.

8. Composition selon l'une quelconque des revendications 1 à 7, dans laquelle le stabilisant est l'oxyde de magnésium.

9. Composition selon l'une quelconque des revendications 1 à 8, dans laquelle l'agent anti-gel est l'éthylèneglycol ou le propylèneglycol.

10. Composition selon l'une quelconque des revendications 1 à 9, contenant en outre jusqu'à 5,0% en poids d'adjuvants.

11. Composition selon la revendication 10, contenant de 0,1% à 0,2% en poids d'adjuvants.

12. Composition selon l'une quelconque des revendications 1 à 11, dans laquelle l'adjuvant est un agent anti-mousee de silicone.

13. Composition selon la revendication 12, dans laquelle l'agent anti-mousse de silicone est présent en une concentration de 0,02% à 0,04% en poids de la composition.

14. Composition en émulsion pouvant s'écouler comprenant les composants suivants:

A. de 25,0% à 30,0% en poids d'herbicide de 2-chloro-2',6'-diéthyl-N-(méthoxyméthyl) acétanilide;

B. de 16,0% à 17,0% en poids d'herbicide de 2-chloro-4-éthylamino-6-isopropylamino-1,3,5-triazine;

C. de 17,5% à 20,0% en poids de monochlorobenzène;

D. de 3,5% à 4,5% en poids d'un agent émulsionnant qui est choisi parmi des alkylarylsulfonates de calcium, des éthoxylates de dodécylphénol, un copolymère séquence oxyde d'éthylène/oxyde de propylène sur butanol et des huiles de ricin polyéthoxylées;

E. de 0,1% à 0,2% en poids d'oxyde de magnésium;

F. de 1,0% à 1,5% en poids d'une argile hydrophile;

G. de 1,0% à 3,0% en poids d'éthylèneglycol;

H. de 0,02% à 0,04% en poids d'un agent antimousse de silicone;

I. le reste étant constitué par de l'eau.